Europäisches Patentamt

European Patent Office

Office européen des brevets

(11) Publication number: **0 164 701**
**B1**

# EUROPEAN PATENT SPECIFICATION

(45) Date of publication of patent specification: **11.01.89**

(51) Int. Cl.⁴: **G 03 B 41/02,** G 03 B 1/48

(21) Application number: **85107043.3**

(22) Date of filing: **04.08.82**

(60) Publication number of the earlier application in accordance with Art. 76 EPC: **0 072 198**

(54) **A film support element assembly, and a projector, camera, and like apparatus incorporating such an assembly.**

(30) Priority: **06.08.81 US 290630**

(43) Date of publication of application:
**18.12.85 Bulletin 85/51**

(45) Publication of the grant of the patent:
**11.01.89 Bulletin 89/02**

(84) Designated Contracting States:
**AT BE CH DE FR GB IT LI LU NL SE**

(56) References cited:
**AT-B- 298 827**
**DE-A-2 015 185**
**DE-B-1 803 112**
**US-A-3 794 415**
**US-A-4 187 868**

(73) Proprietor: **IMAX SYSTEMS CORPORATION**
**38 Isabella Street**
**Toronto Ontario M4Y 1N1 (CA)**

(72) Inventor: **Shaw, William Chester**
**7 Joycelyn Drive**
**Streetsville Ontario L5M 1T5 (CA)**

(74) Representative: **Corin, Christopher John et al**
**Mathisen Macara & Co. The Coach House 6-8**
**Swakeleys Road**
**Ickenham Uxbridge UB10 8BZ (GB)**

Courier Press, Leamington Spa, England.

## Description

The present invention relates to a film support element assembly for a projector, camera or like apparatus having a rolling loop film transport mechanism, the assembly being adapted to support a film in relation to an aperture of said apparatus and comprising a lens element having a film support surface across which successive portions of a film can be laid during transport of said film in a film transport path including said aperture.

The invention further relates to cameras and projectors including such film support element assemblies.

US—A—3494524 discloses the principle of a rolling loop film transport mechanism. The mechanism includes a curved stator and a rotor which co-operate to define a passage through which the film is transported. The rotor has gaps in which loops of film are continuously formed as the rotor rotates. Each loop is developed by feeding film from an input sprocket into one of the rotor gaps as the gap travels from a film inlet location to the aperture, and the loop decays progressively as the gap travels from the aperture to a driven output sprocket. The film is projected or exposed (as the case may be) at the position of the aperture and is held in that position on a registration pin or pins. A number of improvements in this original mechanism are disclosed in US—A—3600073.

In a rolling loop film transport mechanism, the film typically conforms to the curvature of the stator at the position of the projection or exposure aperture. US—A—3794415 does disclose a proposal for permitting the film to adopt a flat configuration during projection but, at least in commercial projectors, it has been found preferable to allow the film to conform to the curvature of the stator at the position of the projection aperture. A lens element known as a "field flattener" supports the film at this position and has a cylindrically curved surface across which the film is laid; the curvature of this surface in combination with other lens elements compensates for the curvature of the film and provides for proper projection of the image.

Normal practice is to position the field flattener in an opening in the stator so that the film frames are successively laid onto the cylindrical surface of the field flattener as the film moves through the projector. A problem with this arrangement is that particles of dust, film emulsion and other debris carried with the film tend to accumulate on the cylindrical surface of the field flattener element. The projection lens of the projector will be focused on the film immediately adjacent to that cylindrical surface so that particles on the surface will be almost in focus.

It has therefore been proposed to provide interchangeable field flattener elements so that a "dirty" element can be replaced with a clean element. In the projector disclosed in US—A—3600073, the field flattener lens element is slidably received in a pair of vertical guides. The element is located against downward movement by a latch which can be released by a button at the top of the lens element holder positioned so that the latch is automatically released when a clean lens element is placed in the guides and moved downwardly. The "dirty" element is ejected downwardly from the guides and the clean element moves into its place. It has also been proposed to provide a wiper above the film path for wiping the cylindrical surface of the replacement lens element as it moves into place.

The arrangement disclosed in US—A—3600073 has been found to operate very satisfactorily in practice while the projector is running, with a barely perceptible effect on the projected image. Nevertheless, to the practiced eye, it is possible to detect a black bar moving across the projected image when the lens elements are changed.

The technical problem is therefore to provide an improved film support element assembly in which the cleanliness of the lens element can be ensured.

The assembly of the present invention is characterised in that it further comprises means coupled to said lens element and adapted to vibrate the element generally in a direction which is parallel to a plane in which the film is disposed at said aperture.

Some embodiments of the invention will now be described, by way of example only, with reference to the accompanying diagrammatic drawings, in which:

Figure 1 is a perspective view, partly exploded, of part of a motion picture projector of the general form disclosed in US—A—3600073 but incorporating a film support element assembly having a "field flattener" lens element; and

Figures 2 and 3 are longitudinal sectional views showing two embodiments of film support element assemblies in which the lens element can be vibrated for cleaning purposes.

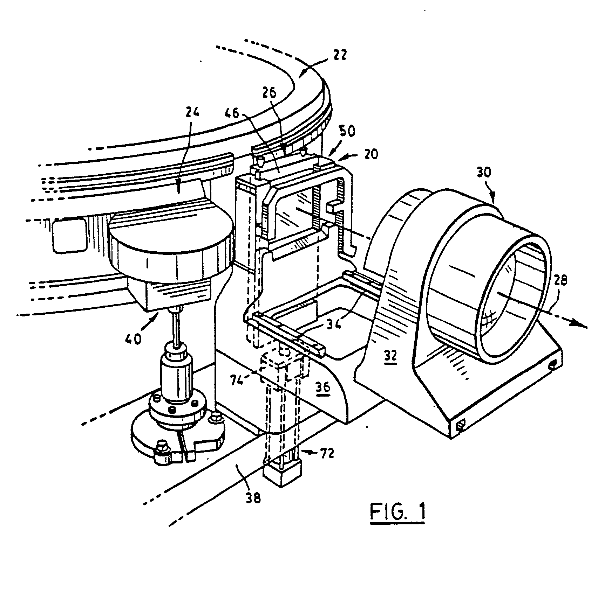

Referring first to Figure 1, the film support element assembly is generally indicated by reference numeral 20 but is partly concealed by associated structure forming part of the projector proper. The principal components of the projector shown in Figure 1 will now be described.

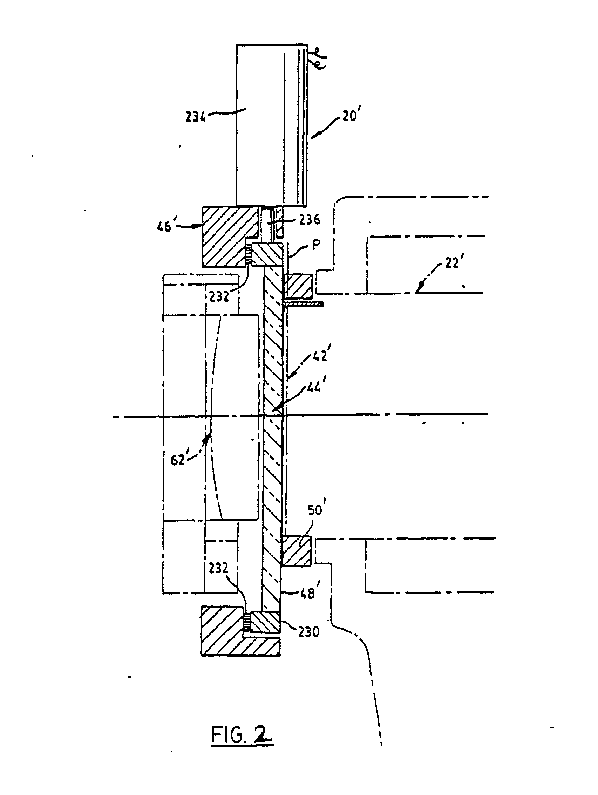

Reference may be made to the US—A—3600073 for a complete description of the rolling loop film transport mechanism of the projector. For present purposes, it is sufficient to note that the projector includes a cylindrical rotor, part of which is visible at 22 in Figure 1 and a stator, part of which is indicated at 24. These two components together define a film passage along which the film is transported by forming successive rolling loops in the film as described in the patent. Successive frames in the film are transported by the rolling loop mechanism to a projection aperture in the stator at the location indicated at 26 in Figure 1. The film is not in fact visible in that view, but can be seen in Figure 2.

The projector includes a projection lamp and a mirror arrangement by which light is projected through the projection aperture in the direction indicated by arrow 28. The light passes successively through the film, through the lens element assembly 20 and then through a projection lens assembly 30 by which the image on the film is focussed onto a screen. Assembly 30 includes a lens mount 32 which is shown partly exploded from the remainder of the projector in Fig. 1 and which is in fact received in guideways 34 in a lens mount saddle 36, so that the projection lens assembly can be adjusted back and forth for focusing purposes. Details of the adjustment mechanism have not been shown since they form no part of the present invention.

Lens mount saddle 36 is secured to the frame of the projector, part of which is indicated at 38, and is itself shaped to provide a housing for the field flattener lens element assembly 20 and to support that assembly adjacent to stator 24. Also shown mounted on frame 38 is a cam unit 40, the purpose of which is to decelerate the moving film in the region of the projection aperture 26 so that the film is arrested and held stationary in the vicinity of the projection aperture 26 for projection of each frame. Cam unit 40 is essentially the same as the corresponding unit described and illustrated in US—A—3 600 073 and will not therefore be described in detail.

In Figure 2, the lens element is shown at 44' and its holder at 46'. The lens element 44' is held in a peripheral frame 230 secured by rubber mountings 232 in holder 46'. The mountings allow the lens element and frame to vibrate, while the holder 46' remains stationary. An aperture block 50' takes the form of a simple frame disposed between the lens element and the rotor of the projector (which is indicated in ghost outline at 22').

The spherical lens element of the projector optical system is indicated in ghost outline at 62'.

A vibration transducer 234 is mounted on top of the lens element holder 46' and has an actuating shaft 236 which is coupled to the lens element frame 230. When the transducer 234 is operated, its shaft 236 vibrates axially over a relatively short amplitude but at relatively high frequency so as to cause a corresponding vibration of the lens element 44' in a direction generally parallel to the plane containing the film. That plane is indicated in ghost outline at P in Fig. 2 and the film is denoted 42'.

Typically, the amplitude of oscillation of the lens element will be less than about ten thousandths of an inch (0.254 mm) and preferably less than one thousandth (0.025 mm). The frequency of oscillation may be in the range 500 to 20,000 Hz. Where a frequency towards the upper end of this range is employed, transducer 234 may be a piezo-electric crystal transducer, while the frequencies towards the lower end of this range an electromechanical transducer may be employed.

The mountings 232 should preferably not unduly impede the vibration of the lens element and may take the form of pads of rubber or other resilient material bonded between the housing 46' and the frame 230. The pads may be disposed at the corners of frame 230 or may take the form of strips extending along opposed sides of the frame.

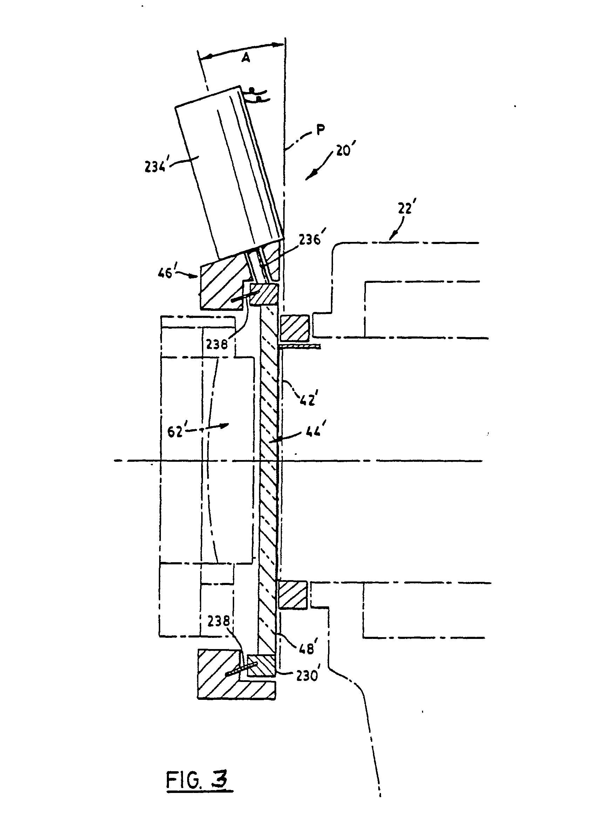

Fig. 3 shows an embodiment which is somewhat similar to the embodiment of Fig. 2 but in which the vibration transducer is set at an inclination to the plane containing the film so that the vibratory motion imparted to the lens element includes a component acting laterally of that plane. In Fig. 3, the lens element 44' is shown mounted on a frame 230' so as to be movable with respect to a housing 46'. The vibration transducer 234' is mounted on housing 46' so that the axis along which its actuating member 236' acts is disposed at an inclination represented by the angle denoted A to the plane P containing film. Frame 230' is coupled to housing 46' by flexible spring webs 238 which are also inclined to plane P so as to allow the lens element 44' to move in a direction which includes a primary component parallel to plane P but which also includes a component laterally of that plane.

Angle A may vary but should not be so great as to cause vibration of the lens element to displace the film laterally of plane P to an extent sufficient to materially affect the focus of the film. However, it is believed that a component of lateral movement may be helpful in keeping the lens element clean.

The amplitude and frequency of vibration and the particular structure of the vibration transducer 234' may be the same as described previously in connection with Fig. 2.

It is believed that the embodiments of Figs. 2 and 3 may be particularly useful in that vibration of the lens element may tend not only to remove accumulated debris from the surface of the element but will also discourage adherence of particles of emulsion, dust and other debris to the surface of the element.

A possible modification could be to provide means for vibrating the lens element (such as those disclosed with reference to Figs. 2 and 3) in combination with other forms of cleaning means (e.g. wipers). Flexible mountings other than the rubber pads or springs specifically disclosed above may be used.

It will also be appreciated that while the invention has been described primarily in connection with a projector of the general type disclosed in US—A—3600073, there is no limitation in this respect. Where a field flattener lens element is required in some form of rolling loop type of projector or in a camera or other similar apparatus, the assembly provided by the invention may also be used. Such an assembly will normally be used in a motion picture film apparatus although within the broad scope of the invention, the assembly could be used with a still camera or projector. Further, it should be noted that the assembly provided by the invention may find application in an environment in which the film lies flat during exposure or projection (as the case may be). For example, as disclosed in US—A—3794415. In that case, the lens element of the assembly would have a generally flat outer face for supporting the film and would not in fact act as a field flattener.

The present application is divided out from copending European application No. 82304112.4 (EP—A—0072198) which claims other aspects of the described apparatus.

## Claims

1. A film support element assembly (20) for a projector, camera or like apparatus having a rolling loop film transport mechanism, the assembly being adapted to support a film in relation to an aperture of said apparatus, the assembly comprising a lens element (44') having a film support surface (48') across which successive portions of a film (42') can be laid during transport of said film in a film transport path including said aperture, characterised in that the apparatus further comprises means (234; 234') coupled to said lens element (44') and adapted to vibrate the element (44') generally in a direction which is parallel to a plane (P) in which the film (42') is disposed at said aperture.

2. An assembly as claimed in claim 1, wherein said direction of vibration is inclined at a small angle (A) to said film plane (P).

3. An assembly as claimed in claim 1 or 2, wherein the frequency of said vibration is in the range 500 to 20,000 Hz.

4. An assembly as claimed in claim 1, wherein the amplitude of vibration of the lens element (44') is less than ten thousandths of an inch (0.254 mm).

5. A projector or camera comprising a rolling loop film transport mechanism including a stator (24) and a rotor (22) adapted to co-operate to form continuous rolling loops in said film and to cause transport thereof through the projector or camera along a film path which includes an aperture, and a film support element assembly (20) to support the film in relation to the aperture as claimed in any one of the preceding claims.

## Patentansprüche

1. Filmführungs-Baueinheit (20) für einen Projektor, eine Kamera oder ein ähnliches Gerät mit Rollschleifen-Filmtransportmechanismus, welche Baueinheit zur Führung eines Filmes bezüglich eines Bildfensters des Gerätes ausgebildet ist und ein Linsenelement (44') mit einer Filmführungsfläche (48') aufweist, an die aufeinanderfolgende Abschnitte des Filmes (42') während des Transportes auf einem das Bildfenster einschließenden Filmweg anlegbar sind, dadurch gekennzeichnet, daß das Gerät weiters eine mit dem Linsenelement (44') gekoppelte Einrichtung (234, 234') aufweist, die zum Vibrieren des Linsenelementes (44') im wesentlichen in einer Richtung parallel zu einer Ebene (P) ausgebildet ist, in welcher der Film (42') im Bildfenster angeordnet ist.

2. Baueinheit nach Anspruch 1, dadurch gekennzeichnet, daß die Richtung der Vibration unter einem kleinen Winkel (A) zur Filmebene (P) geneigt ist.

3. Baueinheit nach Anspruch 1 oder 2, dadurch gekennzeichnet, daß die Frequenz der Vibration im Bereich von 500 bis 20 000 Hz liegt.

4. Baueinheit nach Anspruch 1, dadurch gekennzeichnet, daß die Amplitude der Vibration des Linsenelementes (44') geringer als zehn Tausendstel Zoll (0,254 mm) ist.

5. Projektor oder Kamera mit Rollschleifen-Filmtransportmechanismus, der einen Stator (24) und einen Rotor (22) aufweist, die zur Bildung kontinuierlicher Rollschleifen im Film und zur Bewirkung dessen Transportes durch den Projektor oder die Kamera entlang eines ein Bildfenster aufweisenden Filmweges zusammenwirken, und eine Filmführungs-Baueinheit (20) zur Führung des Filmes bezüglich des Bildfensters, nach einem der vorhergehenen Ansprüche.

## Revendications

1. Dispositif support (20) de film pour projecteur, caméra ou appareil analogue muni d'un mécanisme d'entraînement du film à boucle tournante, ce dispositif étant adapté à supporter un film par rapport à une ouverture de l'appareil et comprenant un élément à lentille (44') ayant une surface (48') de support du film contre laquelle des parties successives d'un film (42') peuvent reposer pendant le déplacement de ce film le long d'un trajet d'entraînement du film comprenant ladite ouverture, caractérisé en ce qu'il comprend des moyens (234, 234') couplés à l'élément à lentille (44') et adaptés à faire vibrer cet élément (44') d'une manière générale dans une direction qui est parallèle à un plan (P) dans lequel est disposé le film au droit de cette ouverture.

2. Dispositif conforme à la revendication 1, dans lequel la direction de vibration est inclinée d'un petit angle (A) par rapport audit plan (P) du film.

3. Dispositif conforme à l'une des revendications 1 ou 2, dans lequel la fréquence de cette vibration est comprise dana la plage allant de 500 à 20.000 Hz.

4. Dispositif conforme à la revendication 1, dans lequel l'amplitude de la vibration de l'élément à lentille (44') est inférieure à 0,01 pouce (0,254 mm).

5. Projecteur ou caméra comprenant un mécanisme d'entraînement du film à boucle tournante qui comporte un stator (24) et un rotor (22) adaptés à coopérer pour former des boucles tournantes continues dans le film et à provoquer son entraînement dans le projecteur ou la caméra le long d'un trajet de film muni d'une ouverture, et un dispositif support (20) de film pour supporter le film relativement à l'ouverture conformément à l'une quelconque des revendications précédentes.

FIG. 1

FIG. 2

FIG. 3